# EUROPEAN PATENT APPLICATION

(11) **EP 4 079 769 A1**
(43) Date of publication of application: **26.10.2022**
(21) Application number: 20901825.8
(22) Date of filing: 09.12.2020
(51) Int. Cl.: C08F 8/12, C08F 290/06, C08F 218/08, C08L 29/04

(54) **POLYVINYL ALCOHOL-BASED RESIN COMPOSITION, SUSPENSION POLYMERIZATION-USE DISPERSION STABILIZER AND VINYL-BASED RESIN PRODUCTION METHOD**

(30) Priority: 17.12.2019 JP 2019227267
(71) Applicant: Denka Company Limited, Tokyo 103-8338 (JP)
(72) Inventor: WATANABE,Wataru, Tokyo 103-8338 (JP); MATSUMOTO,Masanori, Tokyo 103-8338 (JP)
(74) Representative: Mewburn Ellis LLP
(86) International application number: PCT/JP2020/045918
(87) International publication number: WO 2021/125020

(57) **Abstract**

A polyvinyl alcohol-based resin composition including a modified vinyl alcohol-based polymer (A) in which a polyoxyalkylene unit represented by a general formula (I) is bonded to a polyvinyl alcohol chain and a modified vinyl alcohol-based polymer (B) having a double bond in a polyvinyl alcohol chain. 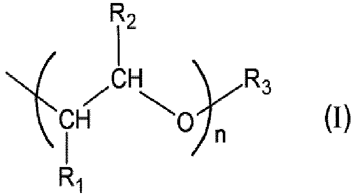 (In which: R₁ and R₂ are independently, a methyl group, an ethyl group or a hydrogen atom, and R₃ is an alkyl group or a hydrogen atom. N represents a number of repeating units and is an integer of 5 ≤ n ≤ 70.)

## Description

### CROSS REFERENCE TO RELATED APPLICATIONS

The present invention claims the benefit of priority to Japanese Patent Application No. 2019-227267 filed on December 17, 2019 with the Japanese Patent Office, the entire contents of which are incorporated herein by reference in its entirety.

### FIELD OF THE INVENTION

The present invention relates to a polyvinyl alcohol-based resin composition comprising a modified vinyl alcohol polymer. The present invention also relates to a dispersion stabilizer for suspension polymerization, particularly a dispersion stabilizer suitable for suspension polymerization of vinyl-based compounds, particularly vinyl chloride.

### BACKGROUND OF THE INVENTION

In the case of suspension polymerization of a vinyl chloride monomer or a mixture of a vinyl chloride monomer and a monomer which can be copolymerized with the vinyl chloride monomer, it is essential to use various dispersion stabilizers. Dispersion stabilizers such as polyvinyl alcohol and methylolcellulose have been used, and among them, polyvinyl alcohol (PVA) has excellent properties and is most generally used. For example, methods of using a modified PVA as a dispersion stabilizer for suspension polymerization of vinyl-based compounds have been proposed, in which an aldehyde-derived carbonyl group is introduced at the end of a vinyl alcohol polymer, an unsaturated double bond is introduced by undergoing a dehydration reaction or deacetic acid reaction during saponification (for example, see Patent Literature 1), and a specific oxyalkylene group is introduced in the side chain (for example, see Patent Literature 2-3).

### PRIOR ART

### Patent Literature

[Patent Literature 1] Japanese Patent Application Publication No. H08-208724
[Patent Literature 2] WO2010/113569
[Patent Literature 3] WO2013/115239

### SUMMARY OF THE INVENTION

These methods are not sufficiently compatible with various types of polymerization cans such as large polymerization cans used in recent years. In other words, they were insufficient to obtain stable and satisfactory vinyl-based resin particles because they lead to vinyl-based resin particles with low plasticizer absorbability due to poor dispersion force, or coarse vinyl-based resin particles with poor workability due to strong dispersion force but poor protective colloidal property, or fine vinyl-based particles but with low bulk specific gravity, or the like.

In view of the above circumstances, an object of an embodiment of the present invention is to provide a polyvinyl alcohol-based resin composition useful as a dispersion stabilizer for suspension polymerization of a vinyl-based compound such as a vinyl chloride, suitable for obtaining fine resin particles having high uniformity of particle size, high bulk specific gravity, and appropriate plasticizer absorbability.

As a result of intensive research to solve the above problems, the present inventors have conducted diligent research, and have found that, it is effective to use a polyvinyl alcohol-based resin composition which comprises a modified vinyl alcohol-based polymer (A) having a predetermined polyoxyalkylene unit (hereinafter referred to as "alkylene modifying group") and a modified vinyl alcohol-based polymer (B) having a double bond in the polyvinyl alcohol chain.

Accordingly, one aspect of the present invention provides a polyvinyl alcohol-based resin composition, comprising a modified vinyl alcohol-based polymer (A) in which a polyoxyalkylene unit represented by a general formula (I) is bonded to a polyvinyl alcohol chain and a modified vinyl alcohol-based polymer (B) having a double bond in a polyvinyl alcohol chain. 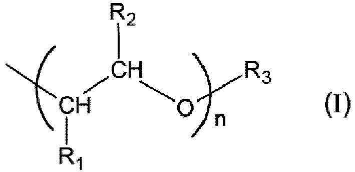 (In which: R₁ and R₂ are independently, a methyl group, an ethyl group or a hydrogen atom, and R₃ is an alkyl group or a hydrogen atom. n represents a number of repeating units and is an integer of 5 ≤ n ≤ 70.)

In one embodiment of the polyvinyl alcohol-based resin composition according to one aspect of the present invention, a weight ratio (A / B) of the modified vinyl alcohol-based polymer (A) to the modified vinyl alcohol-based polymer (B) is 15/85 to 85/15.

In another embodiment of the polyvinyl alcohol-based resin composition according to one aspect of the present invention, a UV absorbance (Abs) of a 0.2 wt% aqueous solution of the modified vinyl alcohol-based polymer (B) at an optical path length of 1 cm and a wavelength of 280 nm is 0.1 or more and 3.0 or less.

In yet another embodiment of the polyvinyl alcohol-based resin composition according to one aspect of the present invention, a modification rate of the polyoxyalkylene unit of the modified vinyl alcohol-based polymer (A) is 0.01 to 5 mol%.

Another aspect of the present invention provides a dispersion stabilizer for suspension polymerization, comprising the polyvinyl alcohol-based resin composition according to the present invention.

In yet another aspect of the present invention provides a method for manufacturing a vinyl-based resin, comprising performing suspension polymerization with use of the dispersion stabilizer for suspension polymerization according to the present invention for dispersing a vinyl-based compound monomer or a mixture of a vinyl-based compound monomer and a monomer which can be copolymerized with the vinyl-based compound monomer in water.

When suspension polymerization of a vinyl-based compound is performed using the dispersion stabilizer for suspension polymerization of the present invention, formation of coarse particles is less and resin particles with a high uniformity of particle size can be obtained. Since the formation of coarse particles is less, blocking during polymerization is suppressed. Since particles having a high uniformity of particle size is obtained, scale adhesion is reduced. In addition, a resin having a high bulk specific gravity can be obtained, and the productivity at the time of resin processing is improved. Further, it is possible to obtain resin particles having appropriate plasticizer absorbability. As such, the dispersion stabilizer for suspension polymerization of the present invention can have the required performance which was difficult to achieve by prior arts.

### DETAILED DESCRIPTION OF THE INVENTION

In one embodiment, the dispersion stabilizer for suspension polymerization according to the present invention comprises a modified vinyl alcohol-based polymer (A) in which a polyoxyalkylene unit represented by the general formula (I) is bonded to a polyvinyl alcohol chain and a modified vinyl alcohol-based polymer (B) having a double bond in a polyvinyl alcohol chain. In addition, in the following description, "modified PVA" refers to a modified vinyl alcohol-based polymer. 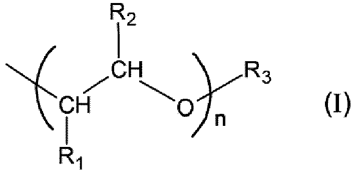 (In which: R₁ and R₂ are independently, a methyl group, an ethyl group or a hydrogen atom, and R₃ is an alkyl group or a hydrogen atom. n represents a number of repeating units and is an integer of 5 ≤ n ≤ 70.)

In the general formula (I), n is preferably 5 or more, more preferably 10 or more, even more preferably 15 or more, and most preferably 20 or more. Further, n is preferably 70 or less, more preferably 60 or less.

The alkyl group represented by R₃ can be, for example, an alkyl group having 1 to 10 carbon atoms, preferably an alkyl group having 1 to 5 carbon atoms, and more preferably an alkyl group having 1 to 3 carbon atoms. Specific examples of the alkyl group represented by R₃ include a methyl group, an ethyl group, an n-propyl group and an isopropyl group.

From the viewpoint of preventing detachment due to a change in pH which results in inability to exhibit performance, the moiety represented by the general formula (I) is preferably bonded to the polyvinyl alcohol chain only via an ether bond and/or a carbon-carbon bond.

In one embodiment, the modified vinyl alcohol-based polymer (B) having a double bond in the polyvinyl alcohol chain has a structure represented by the general formula (II) in the polyvinyl alcohol chain. 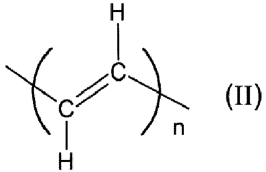 (In which: n represents a number of repeating units and is an integer of 1 ≤ n ≤ 10.)

In the general formula (II), n is preferably 1 or more, and more preferably 2 or more. Further, n is preferably 10 or less, more preferably 5 or less.

In the polyvinyl alcohol-based resin composition of the present invention, the weight ratio (A / B) of the modified vinyl alcohol-based polymer (A) to the modified vinyl alcohol-based polymer (B) is preferably 15/85 to 85/15. When the weight ratio (A / B) is 15/85 or less, the dispersion force is not exhibited, and as a result, the plasticizer absorbability of the vinyl-based resin is lowered. Further, when the weight ratio (A / B) is 85/15 or more, the protective colloid property caused by the modified vinyl alcohol-based polymer (B) is insufficient, and there is a concern that the vinyl-based resin becomes coarse. Therefore, the weight ratio (A / B) of the modified vinyl alcohol-based polymer (A) to the modified vinyl alcohol-based polymer (B) is preferably 15/85 to 85/15, preferably 20/80 to 80/20 and even more preferably 25/75. In addition, in the present invention, a modified vinyl alcohol-based polymer in which a polyoxyalkylene unit represented by the general formula (I) is bonded to the polyvinyl alcohol chain and also has a double bond in the polyvinyl alcohol chain is treated as not corresponding to either the modified vinyl alcohol-based polymer (A) or the modified vinyl alcohol-based polymer (B).

The UV absorbance (Abs) of a 0.2 wt% aqueous solution of the modified vinyl alcohol-based polymer (B) at an optical path length of 1 cm and a wavelength of 280 nm is preferably 0.1 or more and 3.0 or less. This absorption at the wavelength of 280 nm corresponds to the double linkages of the conjugated double bonds, and if the absorbance is less than 0.1, the double bonds are insufficient and the protective colloid property is lowered, and as a result, it is difficult to obtain a vinyl-based resin having an appropriate particle size. Further, when the absorbance is 3.0 or more, the coloring becomes significant, and when used as a dispersant, it affects the coloring of the vinyl-based resin, and in addition, it may become chemically unstable, and the viscosity of the aqueous solution may increase or gelation may occur. Therefore, the UV absorbance of the 0.2 wt% aqueous solution of the modified vinyl alcohol-based polymer (B) at the wavelength of 280 nm needs to be 0.1 or more and 3.0 or less, preferably 0.2 or more and 2.5 or less, and more preferably 0.3 or more and 2.0 or less.

Although it depends on the type of the polyoxyalkylene unit represented by the general formula (I), the modification rate of the polyoxyalkylene unit (hereinafter, also referred to as "alkylene modification rate") of the modified vinyl alcohol-based polymer (A) is preferably 0.01 mol% or more and 5 mol% or less. If the alkylene modification rate exceeds 5 mol%, the balance between the hydrophilic group and the hydrophobic group contained in one molecule of the modified PVA (A) cannot be maintained, and the dispersion force may be strong but the protective colloidal property may be poor. In that case, it becomes difficult to use it as a dispersion stabilizer for suspension polymerization. Therefore, the alkylene modification rate is preferably 5 mol% or less, more preferably 4 mol% or less, and even more preferably 2 mol% or less. On the other hand, when the alkylene modification rate is less than 0.01 mol%, the number of modifying groups contained in the modified PVA (A) is small, and the required physical characteristics are not sufficiently developed. Therefore, it is important that the alkylene modification rate be 0.01 mol% or more, preferably 0.05 mol% or more, and more preferably 0.1 mol% or more.

The alkylene modification rate is a ratio (mol%) of the number of moles of the monomer units which are bonded to a polyoxyalkylene unit having a moiety represented by the above general formula (I) to the number of moles of the total monomer units constituting the polyvinyl alcohol chain of the modified PVA (A). The alkylene modification rate can be determined by proton NMR. Specifically, the modified PVA is saponified to a degree of saponification of 99.95 mol% or more, and then sufficiently washed with methanol to prepare a modified PVA for analysis. The prepared modified PVA for analysis is dissolved in heavy water, and a few drops of a NaOH heavy water solution are added to adjust the pH to 14, and then the measurement is carried out at 80 °C using proton NMR. When calculating from an oxyethylene moiety (example: R₁ = H, R₂ = H), the content is calculated by a conventional method based on the integral value of the peak of 1.2 to 1.8 ppm which is attributed to the methylene group of the polyvinyl alcohol chain of the modified PVA, and the integral value of the peak of 3.6 to 3.7 ppm which is attributed to the oxyethylene moiety. Specifically, assuming the integral value of the methylene group of the polyvinyl alcohol chain of the modified PVA is b, the integral value of the oxyethylene moiety is a, and the number of the repeating units of the oxyethylene moiety is x, considering the number of protons (2H for the methylene group and 4H for the ethylene group), the alkylene modification rate is calculated as {a / (4 × x)} / (b / 2) × 100 (mol%). For example, in the case of a = 1, x = 1, b = 100, it is calculated as 0.5 mol%. Also, when calculating from an oxybutylene or oxypropylene moiety, the content is calculated by a conventional method based on the integral value of the peak of 1.2 to 1.8 ppm which is attributed to the methylene group of the polyvinyl alcohol chain of the modified PVA, and the integral value of the peak of 0.80 to 0.95 ppm which is attributed to the terminal methyl group of the oxybutylene moiety (R₁ = H, R₂ = CH₂CH₃ (or R₁ = CH₂CH₃, R2 = H)) or the oxypropylene moiety (R₁ = H, R₂ = CH₃ (or R₁ = CH₃, R₂ = H)). Specifically, assuming the integral value of the methylene group of the polyvinyl alcohol chain of the modified PVA is b, the integral value of the oxybutylene moiety or the oxypropylene moiety is c, and the number of the repeating units is y, considering the number of protons (2H for the methylene group and 3H for the methyl group), the alkylene modification rate is calculated as {c / (3 × y)} / (b / 2) × 100 (mol%). For example, in the case of c = 1, y = 1, b = 100, it is calculated as 0.67 mol%. In addition, when the modified PVA has both an oxyethylene moiety as well as an oxypropylene moiety or an oxybutylene moiety, the alkylene modification rate calculated based on the integral value of the peak attributed to the terminal methyl group of the oxypropylene moiety or the oxybutylene moiety has higher measurement accuracy than the alkylene modification rate calculated from the oxyethylene moiety. Therefore, if there is a difference between the two values, the alkylene modification rate calculated based on the integral value of the peak attributed to the terminal methyl group of the oxypropylene moiety or the oxybutylene moiety shall be adopted.

The viscosity average degree of polymerization of the modified vinyl alcohol-based polymer (A) is preferably 400 or more, and more preferably 500 or more in order to enhance the dispersion stability when a vinyl-based compound is subjected to suspension polymerization. In addition, the viscosity average degree of polymerization of the modified PVA is preferably 3000 or less, more preferably 2000 or less, even more preferably 1500 or less, and even more preferably 1000 or less, so as not to reduce the dispersion force.

The viscosity average degree of polymerization of the modified vinyl alcohol-based polymer (B) is preferably 600 or more, and more preferably 700 or more in order to enhance the dispersion stability when a vinyl-based compound is subjected to suspension polymerization. In addition, the viscosity average degree of polymerization of the modified PVA is preferably 4000 or less, more preferably 3000 or less, even more preferably 2000 or less, and even more preferably 1500 or less, so as not to reduce the dispersion force.

The viscosity average degree of polymerization is measured according to JIS K6726: 1994. That is, the modified PVA is completely saponified, purified, and then determined from the ultimate viscosity [η] measured in water or dimethyl sulfoxide (DMSO) at 30 °C.

The degree of saponification of the modified vinyl alcohol-based polymer (A) needs to be 65 mol% or more from the viewpoint of water solubility. In addition, the degree of saponification of the modified PVA is preferably 99.9 mol% or less, more preferably 90 mol% or less, and even more preferably 80 mol% or less, in order to increase the porosity of the particles obtained by suspension polymerization of a vinyl-based compound and enhance the plasticizer absorbability.

The degree of saponification of the modified vinyl alcohol-based polymer (B) needs to be 65 mol% or more from the viewpoint of water solubility. In addition, the degree of saponification of the modified PVA is preferably 99.9 mol% or less, more preferably 90 mol% or less, and even more preferably 80 mol% or less, in order to increase the porosity of the particles obtained by suspension polymerization of a vinyl-based compound and enhance the plasticizer absorbability.

The degree of saponification of the modified PVA is measured according to JIS K6726: 1994. That is, it can be obtained by quantifying the residual acetic acid group (mol%) in the sample with sodium hydroxide and subtracting it from 100.

The method for manufacturing the modified vinyl alcohol-based polymer (A) is not particularly limited, and a method of reacting a hydroxyl group of PVA with a polyoxyalkylene group and an organic acid and grafting can be used. However, a method comprising a step of obtaining a modified vinyl ester-based polymer by copolymerizing a vinyl ester-based monomer typified by vinyl acetate with an unsaturated monomer having a polyoxyalkylene unit represented by the general formula (I) in the coexistence of an organic acid, and a step of saponifying the obtained modified vinyl ester-based polymer is simple and economical, thus preferably used.

As an unsaturated monomer that induces the modified structure represented by the general formula (I), mention can be made to polyoxyalkylene alkenyl ether, polyoxyalkylene mono (meth) allyl ether, polyoxyalkylene monovinyl ether, and the like. Specifically, mention can be made to polyoxybutylene polyoxyethylene alkenyl ether, polyoxypropylene polyoxyethylene alkenyl ether, polyoxybutylene alkenyl ether, polyoxybutylene polyoxypropylene alkenyl ether, polyoxypropylene alkenyl ether, polyoxypropylene polyoxyethylene alkenyl ether, polyoxybutylene polyoxyethylene monoallyl ether, polyoxypropylene polyoxyethylene monoallyl ether, polyoxybutylene monoallyl ether, polyoxybutylene polyoxypropylene monoallyl ether, polyoxypropylene monoallyl ether, polyoxypropylene polyoxyethylene monoallyl ether, polyoxybutylene polyoxyethylene monovinyl ether, polyoxypropylene polyoxyethylene monovinyl ether, polyoxybutylene monovinyl ether, polyoxybutylene polyoxypropylene monovinyl ether, polyoxypropylene monovinyl ether, polyoxypropylene polyoxyethylene monovinyl ether, and the like. Among them, ethers represented by the following general formula (III) are more preferably used in terms of reactivity and performance. Specific examples of the polyoxyalkylene alkenyl ether represented by the general formula (III) include polyoxybutylene polyoxyethylene alkenyl ether. 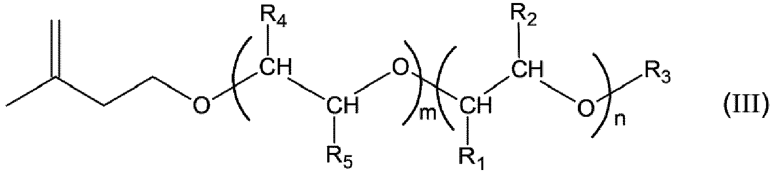 (In the general formula (III), R₁ and R₂ are independently, a methyl group, an ethyl group, or a hydrogen atom. R₃ is an alkyl group or hydrogen atom. n represents a number of repeating units and is an integer of 5 ≤ n ≤ 70. One of R₄ and R₅ is a methyl group or an ethyl group and the other is a hydrogen atom. m represents a number of repeating units and is an integer of 1 ≤ m ≤ 30. Provided that the moiety with the number of repeating units n and the moiety with the number of repeating units m are different.)

As the vinyl ester monomer, in addition to vinyl acetate, mention can be made to vinyl formate, vinyl propionate, vinyl valerate, vinyl caprate, vinyl laurate, vinyl stearate, vinyl benzoate, vinyl pivalate and vinyl versatate, and the like.

The method for introducing a double bond as represented by the general formula (II) into the modified vinyl alcohol-based polymer (B) is not particularly limited, and is a well-known polymerization method, for example, a method of oxidizing a non-modified PVA-based resin with an oxidizing agent such as hydrogen peroxide or periodic acid and heat-treating it, and for example, a method in which polymerization is carried out in the coexistence of a chain transfer agent such as an aldehyde or ketone containing a carbonyl group and a copolymerizable monomer such as an unsaturated carboxylic acid, and the obtained polyvinyl acetate is saponified and subjected to a dehydration reaction so that the double bond is introduced, or a method of polymerizing while blowing oxygen and saponifying the obtained polyvinyl acetate and causing a dehydration reaction to introduce the double bond can be mentioned. Industrially, a particularly advantageous method comprises polymerizing in the coexistence of a chain transfer agent such as aldehydes and ketones containing a carbonyl group, and a copolymerizable monomer such as an unsaturated carboxylic acid, and the obtained polyvinyl acetate is saponified and subjected to a dehydration reaction, resulting in a modified PVA resin having a carbon-carbon double bond in the polyvinyl alcohol chain.

As a modifying species for inducing a double bond in the modified vinyl alcohol-based polymer (B), mention can be made to unsaturated carboxylic acid alkyl esters that can be copolymerized with a vinyl ester-based monomer such as dimethyl maleate and monomethyl maleate, alkyl aldehydes such as acetaldehyde, propionaldehyde and n-butyraldehyde, and halogen-based hydrocarbons such as carbon tetrachloride and bromobutane, and the like.

The polymerization method adopted for performing the present copolymerization may be any of batch polymerization, semi-batch polymerization, continuous polymerization and semi-continuous polymerization. As the polymerization method, any method can be adopted from known methods such as a bulk polymerization method, a solution polymerization method, a suspension polymerization method, and an emulsion polymerization method. Among them, rather than suspension polymerization and emulsion polymerization in which it is necessary to control the polymerized particle size because the modifying species used often have water-solubility and surfactant ability which affect the polymerized particle size, it is preferable to adopt the solution polymerization method in which polymerization is carried out in the presence of an alcohol-based solvent or the bulk polymerization method in which polymerization is carried out without using a solvent. As the alcohol-based solvent used in the solution polymerization method, methanol, ethanol, isopropanol and the like can be used, but the alcohol solvent is not limited thereto. Further, these solvents can be used alone, or two or more kinds of these solvents can be used in combination.

Examples of the polymerization initiator for radical polymerization of the vinyl ester-based monomer include, but are not limited to, azo compounds such as azobisisobutyronitrile, azobis-2,4-dimethylvaleronitrile, azobis (4-methoxy-2,4-dimethylvaleronitrile), azobisdimethylvaleronitrile, azobismethoxyvaleronitrile, peroxides such as acetyl peroxide, benzoyl peroxide, lauroyl peroxide, acetylcyclohexylsulfonyl peroxide, 2,4,4-trimethylpentyl-2-peroxyphenoxy acetate, percarbonate compounds such as diisopropyl peroxydicarbonate, di-2-ethylhexyl peroxydicarbonate, diethoxyethylperoxydicarbonate, perester compounds such as t-butylperoxyneodecanoate and α-cumylperoxyneodecanoate, and the like. They can be used alone, or two or more kinds of them can be used in combination.

Further, when the copolymerization is carried out at a high temperature, coloration of PVA due to decomposition of the vinyl ester-based monomer may be observed. In that case, for the purpose of preventing coloration, it is permissible to add an antioxidant such as citric acid to the polymerization system at about 1 ppm or more and 100 ppm or less (relative to the mass of the vinyl ester-based monomer).

The saponification method when manufacturing the modified PVA according to the present invention is not particularly limited, and it is preferable to saponify the polymer obtained by the above-mentioned method in accordance with a conventional method using alcohol that is also used as a solvent. Examples of the alcohol include methanol, ethanol, butanol and the like. The concentration of the polymer in alcohol can be selected from the range of 20 to 50% by mass. As an alkali catalyst, hydroxides of alkali metals such as sodium hydroxide, potassium hydroxide, sodium methylate, sodium ethylate and potassium methylate, and alcoholate can be used. As an acid catalyst, an aqueous solution of an inorganic acid such as hydrochloric acid or sulfuric acid, and an organic acid such as p-toluenesulfonic acid can be used. The amount of these catalysts used needs to be 1 to 100 mmol equivalent with respect to the vinyl ester-based monomer. The saponification temperature is not particularly limited, but is usually in the range of 10 to 70 °C, preferably selected from the range of 30 to 50 °C. The reaction is usually carried out for 0.5 to 3 hours.

The dispersion stabilizer for suspension polymerization according to the present invention may contain PVA other than the above-mentioned modified PVA and various other additives as long as the essence of the present invention is not impaired. As the additives, mention can be made to, for example, polymerization regulators such as aldehydes, halogenated hydrocarbons, and mercaptans; polymerization inhibitors such as phenol compounds, sulfur compounds, and N-oxide compounds; pH regulators; crosslinking agents; preservatives; antifungal agents, anti-blocking agents; antifoaming agent, and the like. From the viewpoint of significantly exerting the effect of the present invention, the dispersion stabilizer for suspension polymerization of the present invention preferably contains 10% by mass or more, more preferably 30% by mass or more, and even more preferably 70% by mass or more of the modified PVA (A) and the modified PVA (B) in total.

The dispersion stabilizer for suspension polymerization according to the present invention can be particularly preferably used for suspension polymerization of vinyl-based compounds. Therefore, according to another aspect of the present invention, there is provided a method for manufacturing a vinyl-based resin, comprising performing suspension polymerization with dispersing a vinyl-based compound monomer or a mixture of a vinyl-based compound monomer and a monomer which can be copolymerized with the vinyl-based compound monomer in water, using the dispersion stabilizer for suspension polymerization.

As the vinyl-based compound, mention can be made to vinyl halides such as vinyl chloride; vinyl esters such as vinyl acetate and vinyl propionate; acrylic acid, methacrylic acid and esters and salts thereof; maleic acid, fumaric acid and esters and anhydrides thereof; styrene, acrylonitrile, vinylidene chloride, vinyl ether, and the like. Among these, the dispersion stabilizer for suspension polymerization according to one embodiment of the present invention is particularly preferably used for suspension polymerization of vinyl chloride alone or polymerization of vinyl chloride with a monomer that can be copolymerized with vinyl chloride. As a monomer that can be copolymerized with vinyl chloride, mention can be made to vinyl esters such as vinyl acetate and vinyl propionate; (meth)acrylates such as methyl(meth)acrylate and ethyl(meth)acrylate; α-olefins such as ethylene and propylene; unsaturated dicarboxylic acids such as maleic anhydride and itaconic acid; acrylonitrile, styrene, vinylidene chloride, vinyl ether, and the like.

The dispersion stabilizer for suspension polymerization according to the present invention can be used alone or in combination with other stabilizers such as cellulose-based derivatives and surfactants.

By using the dispersion stabilizer for suspension polymerization according to the present invention, a vinyl chloride resin having a high bulk specific gravity of resin particles, a uniform particle size distribution, and excellent physical characteristics can be obtained. Hereinafter, the method for polymerizing a vinyl-based compound will be specifically described with reference to examples, but the method is not limited thereto.

In the case of manufacturing resin particles of a vinyl-based compound such as vinyl chloride resin particles, the above-mentioned dispersion stabilizer for suspension polymerization is added in an amount of 0.01% by mass to 0.3% by mass, preferably 0.04% by mass to 0.15% by mass, with respect to the vinyl-based compound monomer. Further, the ratio of the vinyl-based compound to water can be a mass ratio of vinyl-based compound : water = 1:0.9 to 1:3, preferably vinyl-based compound : water = 1:1 to 1:1.5.

The polymerization initiator may be one conventionally used for polymerizing vinyl-based compounds, and examples include percarbonate compounds such as diisopropylperoxydicarbonate, di-2-ethylhexyl peroxydicarbonate, and diethoxyethylperoxydicarbonate; perester compounds such as t-butylperoxyneodecanoate, α-cumylperoxyneodecanoate; peroxides such as acetylcyclohexylsulfonyl peroxide and 2,4,4-trimethylpentyl-2-peroxyphenoxyacetate; azo compounds such as azobis-2,4-dimethylvaleronitrile and azobis (4-methoxy-2,4-dimethylvaleronitrile); and potassium persulfate, ammonium persulfate, hydrogen peroxide, and the like. They can be used alone, or in combination.

Further, it is also optional to add a polymerization regulator, a chain transfer agent, a gelation improver, an antistatic agent, a pH regulator and the like, which are appropriately used for the polymerization of vinyl-based compounds.

In carrying out the polymerization of the vinyl-based compound, the charging ratio of each component, the polymerization temperature and the like may be determined according to the conditions conventionally adopted in the suspension polymerization of the vinyl-based compound, and there is no particular reason for limitation.

### EXAMPLES

Hereinafter, the present invention will be described in more detail with reference to examples.

### (Manufacturing of PVA1)

1850 g of vinyl acetate, 1000 g of methanol, and 133 g of a polyoxyalkylene alkenyl ether (monomer A) represented by the general formula (III) with m = 5 to 9 and n = 45 to 55 as a modifying species were charged into a polymerization can. The inside of the system was replaced with nitrogen for 30 minutes. It was confirmed by NMR that m = 5 to 9 and n = 45 to 55 for the monomer A. 0.25 g of azobisisobutyronitrile was charged into the polymerization can, polymerization was conducted at 60 °C for 9 hours, and then cooled to terminate the polymerization. Then, the unreacted vinyl acetate was removed by a conventional method, and the obtained polymer was saponified with a sodium hydroxide-methanol solution by a conventional method to prepare PVA1. When the viscosity average degree of polymerization, the degree of saponification and the modification rate of the obtained PVA1 were measured by the above-mentioned analytical methods, the viscosity average degree of polymerization was 750, the degree of saponification was 73 mol%, and the modification rate was 0.18 mol%.

Using an ultraviolet-visible near-infrared spectrophotometer (spectrophotometer UV1800 manufactured by Shimadzu Corporation), the absorbance of a 0.2 wt% aqueous solution of the polyvinyl alcohol-based dispersant at the optical path length of 1 cm and the wavelength of 280 nm was measured and found to be 0.02 Abs. A sample container (cell) having a thickness of 1 cm was used.

### (Manufacturing of PVA2)

1800 g of vinyl acetate, 612 g of methanol, and 4 g of dimethyl maleate were charged in a polymerization can, and the inside of the system was replaced with nitrogen for 30 minutes. 0.3 g of azobisisobutyronitrile was charged into the polymerization can, and 400 g of vinyl acetate and 35 g of dimethyl maleate were added dropwise for polymerization at 60 °C for 11 hours. After that, the dropping was stopped, and the mixture was cooled to stop the polymerization. Then, the unreacted vinyl acetate was removed by a conventional method, and the obtained polymer was saponified with a sodium hydroxide-methanol solution by a conventional method to prepare PVA2. The method for obtaining the organic acid modification rate is not particularly limited and can be obtained by acid value or the like, but since it is convenient to determine it by proton NMR, and it was determined by proton NMR here. Specifically, the modified PVA was completely saponified to a degree of saponification of 99.95 mol% or more, and then sufficiently washed with methanol to prepare a modified PVA for analysis. When dimethyl maleate is used as the modifying species, a carboxyl group is generated in the process of complete saponification. Therefore, the modification rate of the modified species is equal to the organic acid modification rate. The prepared modified PVA for analysis was dissolved in heavy water, and a few drops of a NaOH heavy water solution were added to adjust the pH to 14, and then measurement was performed at 80 °C to obtain a ¹H-NMR spectrum. The organic acid modification rate was calculated based on the integral value of the peak of the methylene group (1.2 to 1.8 ppm) of the polyvinyl alcohol chain of the modified PVA. For example, when the organic acid unit has a carboxyl group, it was calculated from the peak of 2.2 to 2.9 ppm, which is a hydrogen atom of the carbon adjacent to the carboxyl group. Taking the case where the organic acid unit has a carboxyl group as an example, assuming the integral value of the methylene group of the polyvinyl alcohol chain of the modified PVA is b, and the integral value of the hydrogen atom of the carbon adjacent to the carboxyl group is a, considering the number of protons (methylene group is 2H), the modification rate was calculated as a / (b / 2) × 100 (mol%). For example, when a = 1 and b = 100, it is calculated as 2.0 mol%.

For PVA2, the viscosity average degree of polymerization, the degree of saponification, the modification rate, and the UV absorbance of a 0.2 wt% aqueous solution at the wavelength of 280 nm were measured by the above-mentioned analytical methods. The results are shown in Table 1.

### (Manufacturing of PVA3)

1825 g of vinyl acetate, 1740 g of methanol, and 2 g of dimethyl maleate were charged in a polymerization can, and the inside of the system was replaced with nitrogen for 30 minutes. 0.3 g of azobisisobutyronitrile was charged into the polymerization can, and 550 g of vinyl acetate and 22 g of dimethyl maleate were added dropwise for polymerization at 60 °C for 11 hours. After that, the dropping was stopped, and the mixture was cooled to stop the polymerization. Then, the unreacted vinyl acetate was removed by a conventional method, and the obtained polymer was saponified with a sodium hydroxide-methanol solution by a conventional method to prepare PVA3. For PVA3, the viscosity average degree of polymerization, the degree of saponification, the modification rate, and the UV absorbance of a 0.2 wt% aqueous solution at the wavelength of 280 nm were measured by the above-mentioned analytical methods. The results are shown in Table 1.

### (Manufacturing of PVA4)

1800 g of vinyl acetate, 612 g of methanol, and 7 g of dimethyl maleate were charged in a polymerization can, and the inside of the system was replaced with nitrogen for 30 minutes. 0.3 g of azobisisobutyronitrile was charged into the polymerization can, and 400 g of vinyl acetate and 63 g of dimethyl maleate were added dropwise for polymerization at 60 °C for 11 hours. After that, the dropping was stopped, and the mixture was cooled to stop the polymerization. Then, the unreacted vinyl acetate was removed by a conventional method, and the obtained polymer was saponified with a sodium hydroxide-methanol solution by a conventional method to prepare PVA4. For PVA4, the viscosity average degree of polymerization, the degree of saponification, the modification rate, and the UV absorbance of a 0.2 wt% aqueous solution at the wavelength of 280 nm were measured by the above-mentioned analytical methods. The results are shown in Table 1.

### (Manufacturing of PVA5)

1800 g of vinyl acetate, 612 g of methanol, and 10 g of dimethyl maleate were charged in a polymerization can, and the inside of the system was replaced with nitrogen for 30 minutes. 0.3 g of azobisisobutyronitrile was charged into the polymerization can, and 400 g of vinyl acetate and 88 g of dimethyl maleate were added dropwise for polymerization at 60 °C for 11 hours. After that, the dropping was stopped, and the mixture was cooled to stop the polymerization. Then, the unreacted vinyl acetate was removed by a conventional method, and the obtained polymer was saponified with a sodium hydroxide-methanol solution by a conventional method to prepare PVA5. For PVA5, the viscosity average degree of polymerization, the degree of saponification, the modification rate, and the UV absorbance of a 0.2 wt% aqueous solution at the wavelength of 280 nm were measured by the above-mentioned analytical methods. The results are shown in Table 1.

### (Manufacturing of PVA6)

3000 g of vinyl acetate and 15 g of acetaldehyde as a modifying species were charged in a polymerization can, and the inside of the system was replaced with nitrogen for 30 minutes. 0.2 g of azobisisobutyronitrile was charged into the polymerization can, and polymerization was carried out at 65 to 75 °C for 6 hours. After that, the mixture was cooled to stop the polymerization. Then, the unreacted vinyl acetate was removed by a conventional method, the obtained polymer was saponified with a sodium hydroxide-methanol solution by a conventional method, and dried at 120 °C for 6 hours to prepare PVA6. The modification rate when acetaldehyde was used as the modifying species was equal to the carbonyl modification rate. The carbonyl modification rate was determined by proton NMR. Specifically, the modified PVA was completely saponified to a degree of saponification of 99.95 mol% or more, and then sufficiently washed with methanol to prepare a modified PVA for analysis. The prepared modified PVA for analysis was dissolved in heavy water, and a few drops of a NaOH heavy water solution were added to adjust the pH to 14, and then the measurement was performed at 80 °C to obtain a ¹H-NMR spectrum. Based on the integral value of the peak of the methylene group (1.2 to 1.8 ppm) in the main chain of the modified PVA, in the case of acetaldehyde, it was calculated by the integral value of the peak of the methyl group terminal (2.15 to 2.35 ppm). Specifically, assuming the integral value of the methylene group of the main chain of the modified PVA is b, and the integral value of the methyl group terminal of acetaldehyde is d, considering the number of protons (2 for the methylene group and X = 3 for the methyl group terminal of the acetaldehyde), the carbonyl modification rate is calculated as (d / 3) / (b / 2) × 100 (mol%). For PVA6, the viscosity average degree of polymerization, the degree of saponification, the modification rate, and the UV absorbance of a 0.2 wt% aqueous solution at the wavelength of 280 nm were measured by the above-mentioned analytical methods. The results are shown in Table 1.

### (Manufacturing of PVA7)

1220 g of vinyl acetate, 1350 g of methanol, and 52 g of a polyoxyalkylene alkenyl ether (monomer B) represented by the general formula (III) where m = 5 to 9 and n = 15 to 25 as a modifying species were charged into a polymerization can. The inside of the system was replaced with nitrogen for 30 minutes. It was confirmed by NMR that m = 5 to 9 and n = 15 to 25 for the monomer B. 0.25 g of azobisisobutyronitrile was charged into a polymerization can, and polymerization was conducted at 60 °C for 9 hours. After that, the mixture was cooled to stop the polymerization. Then, the unreacted vinyl acetate was removed by a conventional method, and the obtained polymer was saponified with a sodium hydroxide-methanol solution by a conventional method to prepare PVA7. For PVA7, the viscosity average degree of polymerization, the degree of saponification, the modification rate, and the UV absorbance of a 0.2 wt% aqueous solution at the wavelength of 280 nm were measured by the above-mentioned analytical methods. The results are shown in Table 1.

### (Manufacturing of PVA8)

PVA8 was prepared in the same manner as PVA1 except that 56 g of a polyethylene glycol allyl ether (monomer C) (Uniox PKA-5005 provided by NOF CORPORATION) where n = 15 to 25 was charged in the polymerization can instead of monomer A. It was confirmed by NMR that n = 15 to 25 for the monomer C. For PVA8, the viscosity average degree of polymerization, the degree of saponification, the modification rate, and the UV absorbance of a 0.2 wt% aqueous solution at the wavelength of 280 nm were measured by the above-mentioned analytical methods. The results are shown in Table 1.

### (Manufacturing of PVA9)

PVA9 was prepared in the same manner as PVA1 except that 74 g of a polyethylene glycol polypropylene glycol allyl ether (monomer D) (UNILUBE PKA-5013 provided by NOF CORPORATION) represented by the general formula (III) where m = 15 to 25 and n = 15 to 25 was charged in the polymerization can instead of monomer A. It was confirmed by NMR that m = 15 to 25 and n = 15 to 25 for the monomer D. For PVA9, the viscosity average degree of polymerization, the degree of saponification, the modification rate, and the UV absorbance of a 0.2 wt% aqueous solution at the wavelength of 280 nm were measured by the above-mentioned analytical methods. The results are shown in Table 1.

### (Manufacturing of PVA10, 11)

For PVA10 and PVA11, polyvinyl alcohols W-24N and B-24 manufactured by Denka Co., Ltd. were used, respectively. For PVA10 and PVA11, the viscosity average degree of polymerization, the degree of saponification, the modification rate, and the UV absorbance of a 0.2 wt% aqueous solution at the wavelength of 280 nm were measured by the above-mentioned analytical methods. The results are shown in Table 1.

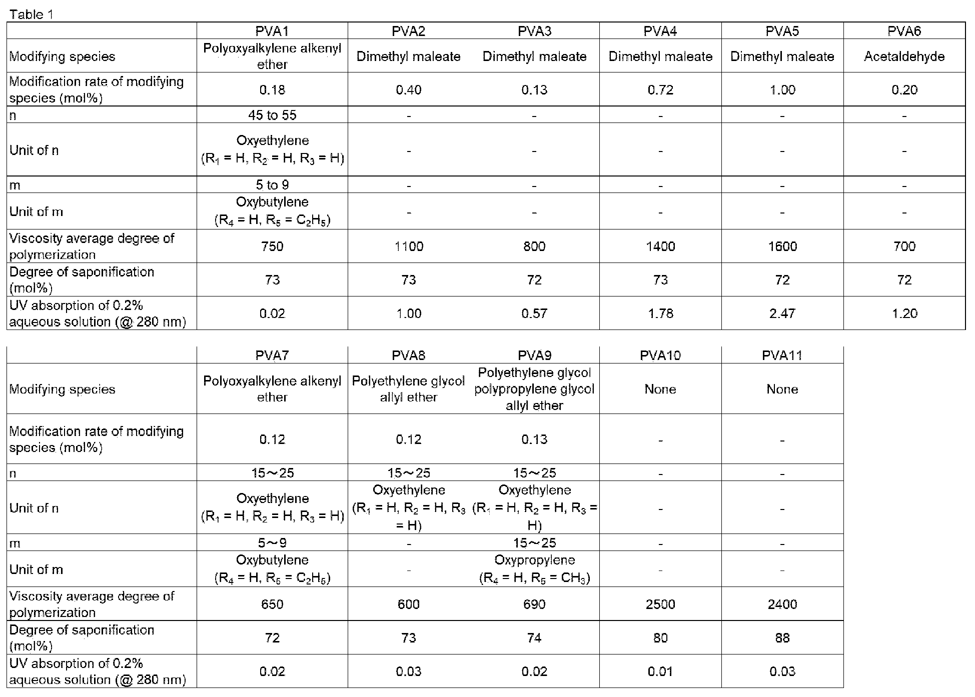

### (Examples 1 to 10 and Comparative Examples 1 to 4)

Each PVA was blended with Nauta^{®} mixer at the weight ratio shown in Table 2 to obtain a polyvinyl alcohol-based resin composition. Using them as dispersion stabilizers, suspension polymerization of vinyl chloride was performed and evaluated.

### <Suspension polymerization of vinyl chloride>

To an autoclave made of stainless steel having a capacity of 30 L equipped with a stirrer, 10.1 kg of water at 30 °C, 5.8 g of polyvinyl alcohol-based resin composition, 4.6 g of t-butylperoxyneodecanoate as a polymerization initiator, and 1 g of α-cumylperoxyneodecanoate were charged under stirring. After degassing the autoclave with vacuum, 7.2 kg of vinyl chloride monomer was added and polymerization was carried out at 57 °C for 4 hours.

### <Evaluation of vinyl chloride resin>

The average particle size, particle size distribution, plasticizer absorption amount, and bulk specific gravity of the obtained vinyl chloride resin were evaluated by the following methods.

The average particle size was measured according to JIS Z8815: 1994. 60 mesh (opening 250 µm), 80 mesh (opening 180 µm), 100 mesh (opening 150 µm), 150 mesh (opening 106 µm), 200 mesh (opening 75 µm) were used, and the ratio of the amount of particles on 60 mesh (opening 250 µm) to the total amount was defined as the amount of coarse particles, the particle size (D50) with a cumulative frequency of 50% (mass basis) was defined as the average particle size, and the difference between the particle size (D80) having a cumulative frequency of 80% (mass basis) and the particle size (D20) having a cumulative frequency of 20% (mass basis) was defined as the particle size distribution.

The bulk specific gravity was measured according to JIS K6720-2: 1999.

The plasticizer absorption amount was measured by the following procedure. Glass fiber was packed in the bottom of an aluminum alloy container having an inner diameter of 25 mm and a depth of 85 mm, and 10 g of vinyl chloride resin was charged. To this, 15 mL of a plasticizer (dioctylphthalate, hereinafter referred to as DOP) was added, and the mixture was left for 30 minutes to allow DOP to sufficiently permeate the vinyl chloride resin. After that, the excess DOP was centrifuged under an acceleration of 1500 G, and the mass of the DOP absorbed in 10 g of the vinyl chloride resin was measured and converted into the mass part (phr) of the DOP per 100 parts by mass of the vinyl chloride resin.

The results are shown in Table 2. In Comparative Examples 1, 3 and 4, since the modified vinyl alcohol-based polymer (B) having a double bond in the polyvinyl alcohol chain was not used, the vinyl chloride resin particles were coarsened, the amount of coarse particles was large, and the uniformity of the particle size was poor. In Comparative Example 2 in which the modified vinyl alcohol-based polymer (A) was not used, vinyl chloride particles having poor plasticizer absorbability were obtained. On the other hand, when the polyvinyl alcohol-based resin compositions shown in Examples 1 to 10 were used, it was found that the vinyl chloride resin particles having less coarse particles and high uniformity of particle size were obtained. In addition, polymer particles having excellent plasticizer absorbability, reduced blocking and scale adhesion during polymerization, and excellent monomer removal properties were obtained. Therefore, the dispersion stabilizers according to Examples 1 to 10 were extremely industrially advantageous.

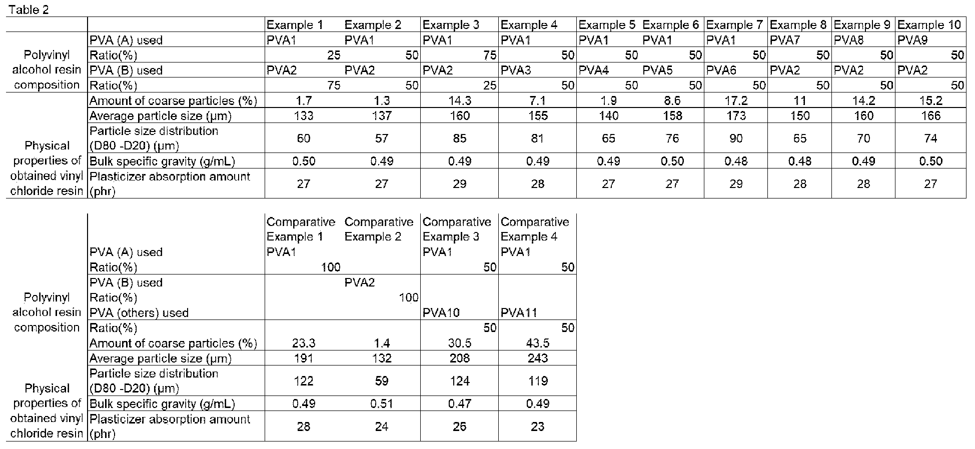

## Claims

1. A polyvinyl alcohol-based resin composition, comprising a modified vinyl alcohol-based polymer (A) in which a polyoxyalkylene unit represented by a general formula (I) is bonded to a polyvinyl alcohol chain and a modified vinyl alcohol-based polymer (B) having a double bond in a polyvinyl alcohol chain. 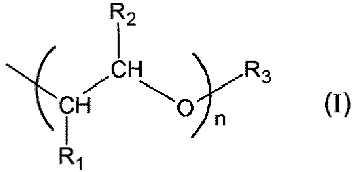 (In which: R₁ and R₂ are independently, a methyl group, an ethyl group or a hydrogen atom, and R₃ is an alkyl group or a hydrogen atom. n represents a number of repeating units and is an integer of 5 ≤ n ≤ 70.)

2. The polyvinyl alcohol-based resin composition according to claim 1, wherein a weight ratio (A / B) of the modified vinyl alcohol-based polymer (A) to the modified vinyl alcohol-based polymer (B) is 15/85 to 85/15.

3. The polyvinyl alcohol-based resin composition according to claim 1 or 2, wherein a UV absorbance (Abs) of a 0.2 wt% aqueous solution of the modified vinyl alcohol-based polymer (B) at an optical path length of 1 cm and a wavelength of 280 nm is 0.1 or more and 3.0 or less.

4. The polyvinyl alcohol-based resin composition according to any one of claims 1 to 3, wherein a modification rate of the polyoxyalkylene unit of the modified vinyl alcohol-based polymer (A) is 0.01 to 5 mol%.

5. A dispersion stabilizer for suspension polymerization, comprising the polyvinyl alcohol-based resin composition according to any one of claims 1 to 4.

6. A method for manufacturing a vinyl-based resin, comprising performing suspension polymerization with use of the dispersion stabilizer for suspension polymerization according to claim 5 for dispersing a vinyl-based compound monomer or a mixture of a vinyl-based compound monomer and a monomer which can be copolymerized with the vinyl-based compound monomer in water.
